# EUROPEAN PATENT SPECIFICATION

(11) **EP 3 236 113 B1**
(45) Date of publication and mention of the grant of the patent: **20.10.2021**
(21) Application number: 17165078.1
(22) Date of filing: 05.04.2017
(51) Int. Cl.: F16J 15/04, F16J 15/08

(54) **IMPROVEMENTS IN OR RELATING TO METAL-TO-METAL SEALING**
VERBESSERUNGEN AN ODER IN ZUSAMMENHANG MIT METALL-METALL-DICHTUNGEN
AMÉLIORATIONS APPORTÉES OU SE RAPPORTANT AU SCELLEMENT MÉTAL À MÉTAL

(30) Priority: 18.04.2016 GB 201606733
(43) Date of publication of application: 25.10.2017
(73) Proprietor: Ford Global Technologies, LLC, Dearborn, MI 48126 (US)
(72) Inventor: DEMEULENAERE, Xavier, London, Greater London E3 2UF (GB); MICHEL, Mark, Dartford, Kent DA1 1 LX (GB)
(74) Representative: Stratagem IPM Limited

(56) References cited:
- DE-C- 814 977
- DE-C- 921 903
- GB-A- 2 284 872
- JP-A- 2012 082 891
- US-A- 3 403 717
- US-A- 3 937 478

## Description

This invention relates to improvements in or relating to metal-to-metal sealing and, in particular, to the use of sintered parts to create metal-to-metal seals.

Metal-to-metal seals are deployed in various locations within automotive systems, typically for internal seals in parts of the system where there is some tolerance of imperfection, that is, where the seal may still perform its required function despite being less than 100% effective.

For example, the oil connections in the low end of an engine may still function effectively where seals are less than perfect, because oil escaping through these seals will drain back to the oil sump. Although the oil can safely drain back to the oil sump and therefore the engine can continue to run, the fuel consumption of the engine will increase and the pumping requirements will also increase. It therefore remains the aim to maximise the efficiency of sealing throughout the engine.

In other parts of the engine, where the integrity of sealing is paramount to the functioning of the engine and/or the user's perception of the quality of the engine, seals are implemented using rubber O-rings, liquid sealants such as room temperature vulcanising rubbers or gaskets. However, these solutions are not universally applicable because of the additional parts, costs and manufacture steps.

GB 2 284 872 A (Japan Atomic Energy Research Institute) relates to a metal gasket, a vacuum flange for the metal gasket, and a vacuum seal structure using the metal gasket utilised in a vacuum seal at connections for piping and the like in a vacuum device.

JP 2012 082891 A discloses a metal-to-metal seal according to the preamble of claim 1.

It is against this background that the present invention has arisen.

According to the present invention there is provided a metal-to-metal seal consisting of a first mating surface and a second mating surface; wherein the first mating surface is provided with an annular projection having one or more annular grooves and wherein the projection is configured such that when the first and second surface are brought into mating contact, the annular projection of the first mating surface deforms the second mating surface to form a seal, wherein the projection has an isosceles triangular cross section; and wherein the seal does not comprise a gasket or liquid sealant.

The provision of an annular projection results in the provision of an annular seal, thereby preventing fluid bypassing the seal.

The provision of the annular projection on the first mating surface that deforms the second mating surface to provide the seal obviates the need of additional parts such as gaskets, liquid sealant etc.

The provision of the seal by the deformation of the second mating surface also provides the advantage that the second mating surface does not have to be provided with a specific form or shape to enable mating, because it is deformed by the projection on the first mating surface.

Each groove provides a location into which the material of the second mating surface can collect. Furthermore, the topology complicates the path that must be followed by fluid in order to break the seal, i.e. to move from one side of the seal to the other.

The first mating surface may be fabricated from a harder material than the second mating surface. For example the first mating surface may be fabricated from steel and the second mating surface may be fabricated from aluminium. More generally the first mating surface can be formed from a hard ferrous material, whilst the second mating surface can be formed from a lightweight metal, such as aluminium.

The first mating surface may be a sintered part. The provision of a sintered part simplifies the manufacture of the parts because the entire first mating surface can be provided as a single piece, rather than applying the projection subsequent to the forming of the first mating surface or machining the part to create the projection.

The projection has a substantially triangular cross section. An isosceles triangular cross section is the simplest shape for the projection and has the advantages that it is uncomplicated to sinter and provides a good pressure distribution when the two surfaces are brought into mating contact.

The triangular cross section of the projection may be modified by a curved tip. The curved tip reduces the initial pressure as the two mating surfaces are brought together, thereby reducing the risk of the second mating surface cracking.

The annular groove may be provided below the level of the first mating surface.

The projection may have a height exceeding 1mm. More particularly, the projection may have a height in the region of 1mm to 5mm. For example, the projection may have a height of 3mm.

The projection in the region of 3mm to 5mm is more appropriate where the two mating surfaces are provided in the same material. Under these circumstances, when the two parts are clamped together both parts will deform so the projection reduces in height and the second mating surface deforms to provide a groove. In order to have the required final height after the parts have been brought into mating contact, the projection must be provided with a greater initial height than is required if the second mating surface is fabricated from a less hard material.

The first mating surface may be fabricated from steel or any similar hard ferrous material. The second mating surface may be fabricated from aluminium or any similar lightweight material.

The invention will now be further and more particularly described, by way of example only, and with reference to the accompanying drawings, in which:
Figures 1A and 1B show side and perspective views respectively of a join between a ladderframe and an oil pump deploying a seal according to the present invention;
Figure 2 shows a cross section through a seal according to the present invention; and
Figures 3A to 3E show different alternatives for the cross section of the projection; the alternatives shown in figs 3A, 3B, 3D and 3E are not claimed.

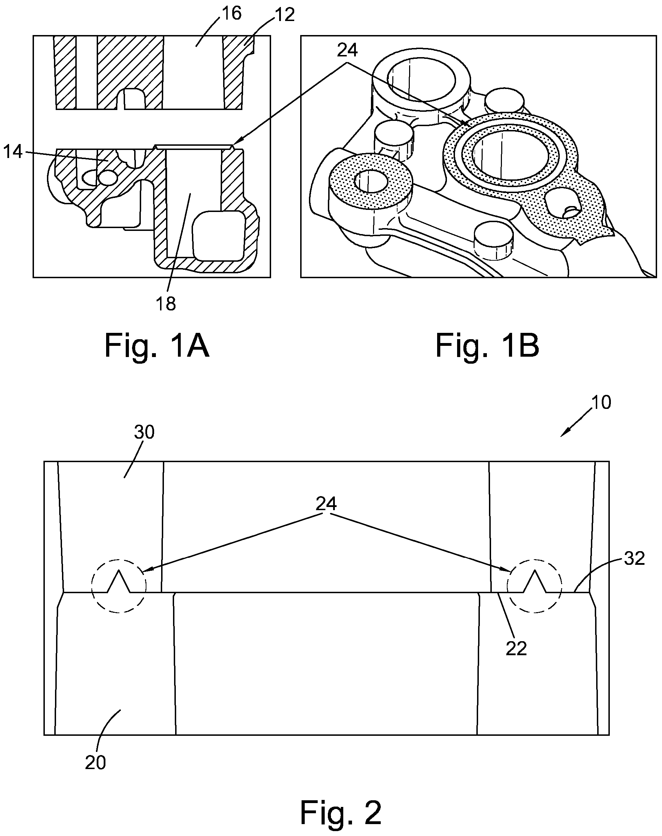

Figure 1 shows a metal-to-metal seal 10 provided between a ladderframe 12 and an oil pump 14. When the seal 10 is in place it enables oil to flow between an oil outlet channel 18 in the oil pump 14 and an oil inlet channel 16 in the ladderframe 12. The seal 10 is formed when an annular projection 24 on the oil pump 14 is brought into contact with the ladderframe 12. The contact pressure between the two surfaces causes the ladderframe 12 to deform to provide a groove to accommodate the projection 24 thereby providing the seal 10.

Although the annular projection illustrated in Figure 1 is circular, the invention is not limited to circular annuli. The annular projection can be shaped as required by the parts to be sealed. For example, it may be elliptical or a more irregular shape. It could alternatively take the form of a polygon, either a regular or irregular polygon.

Although Figures 1A and 1B show the seal deployed on a ladderframe, the seal may also be deployed in an oil pump body or oil cooler adaptor, for example.

Figure 2 shows a cross section through a seal 10. The seal 10 is provided between a first part 20 and a second part 30. The first and second parts are provided with a first mating surface 22 and a second mating surface 32 respectively. The first mating surface 22 is provided with an annular projection 24. In this embodiment, the projection 24 has a triangular cross section. The second mating surface 32 can be machined to provide a smooth surface to minimise leakage arising from the surface roughness of the part. The first mating surface 22 is provided on a sintered part. This allows the projection 24 to be formed integrally with the part 20 that is provided with the first mating surface 22.

The seal 10 is formed when the two parts 20, 30 are brought together and pressure is applied perpendicular to the join between the parts, i.e. vertically as illustrated in Figure 2. The projection 24 on the harder, sintered part 20 deforms the smooth surface of the second mating surface 32 forming an indentation into which the projection 24 fits. The seal 10 is therefore formed between the two mating surfaces.

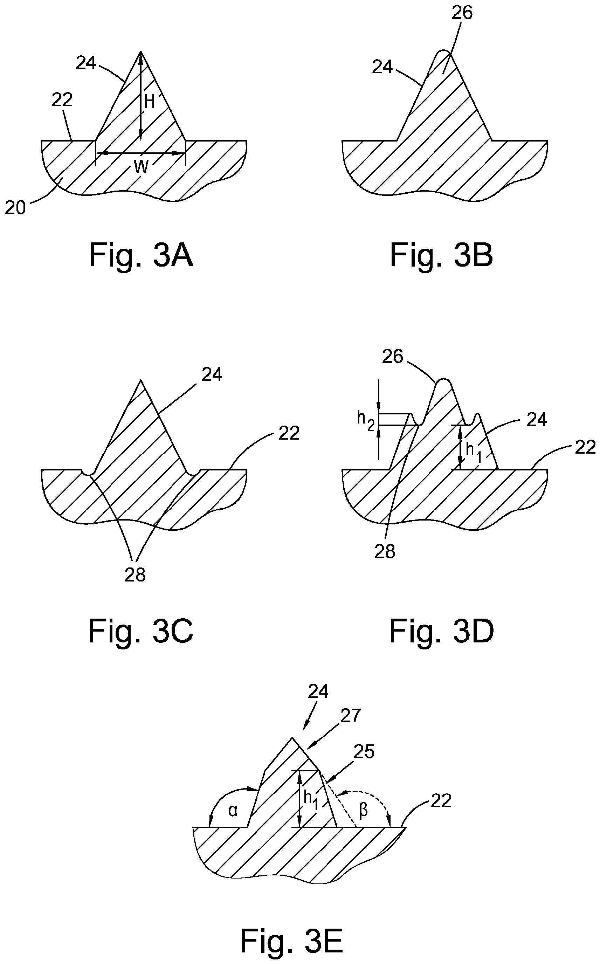

Figures 3A to 3E show alternative cross sectional profiles that may be applied to the projection 24.

The projections 24 shown in Figures 3A to 3E each have a base width W and height H. The base width W of the projection can vary between 1mm and 5mm, for example 3mm. The height H of the projection should exceed 1mm, for example 3mm, 4mm or even up to 5mm. Projections exceeding 10mm in height are impractical because the pressures required to deform the second mating surface sufficiently to form a seal are excessive and can compromise the integrity of the parts 20, 30. The ratio of the base width to the height is typically around 1, although it can be more than one or less than one. However, it would not generally exceed 10 or be less than 0.1 because such extreme shapes can be difficult to sinter.

Figure 3A shows a projection 24 (not claimed) that has a cross section of an isosceles triangle. The height H is approximately equal to the width W and therefore the ratio of width to height is approximately equal to one.

Figure 3B shows a projection 24 (not claimed) wherein the triangular cross section has been modified by providing a curved tip 26. This configuration is particularly appropriate if the part 30 including the second mating surface 32 is prone to failure by brittle fracture as the curved tip 26 decreases the initial pressure experienced by the second mating surface 32.

Figure 3C shows a projection 24 provided with two grooves 28, one at either side of the projection. The grooves 28 provide a location into which displaced material from the second mating surface 32 can collect and thus providing a more tortuous path for fluid. The grooves 28 can be provided around the entire circumference of the annular projection or they may be provided discontinuously. Although two grooves 28 are shown in Figure 3C, a symmetrical configuration is not essential. A groove 28 could be provided at one side of the projection 24 only.

Figure 3D shows a projection 24 (not claimed) including a curved tip 26 and two grooves 28 at a height h₁ above the first mating surface 22. The two grooves 28 have a depth h₂, which is smaller than h₁. Although the two grooves 28 are illustrated in Figure 3D as being at the same height h₁ above the first mating surface 22, in some embodiments the grooves 28 may be at different heights.

Figure 3E shows a more complex shaped projection 24 (not claimed) including a lower portion 25 having height h₁ a first angle of inclination α, and an upper portion 27 having a second angle of inclination β. In this embodiment β is greater than α.

It will further be appreciated by those skilled in the art that although the invention has been described by way of example with reference to several embodiments it is not limited to the disclosed embodiments and that alternative embodiments could be constructed without departing from the scope of the invention as defined in the appended claims.

## Claims

1. A metal-to-metal seal (10) consisting of a first mating surface (22) and a second mating surface (32); wherein the first mating surface is provided with an annular projection (24) having one or more annular grooves (28) and wherein the projection is configured such that when the first and second surface are brought into mating contact, the annular projection of the first mating surface deforms the second mating surface to form a seal, wherein the projection has an isosceles triangular cross section; **characterised in that** the metal-to-metal seal does not comprise a gasket or liquid sealant.

2. The seal according to claim 1, wherein the first mating surface is fabricated from a harder material than the second mating surface.

3. The seal according to claim 1 or claim 2, wherein the first mating surface is a sintered part.

4. The seal according to claim 1, wherein the triangular cross section of the projection is modified by a curved tip.

5. The seal according to claim 1, wherein the annular groove is provided below the level of the first mating surface.

6. The seal according to any one of the preceding claims, wherein the projection has a height exceeding 1mm.

7. The seal according to any one of the preceding claims, wherein the first mating surface is fabricated from steel.

8. The seal according to any one of the preceding claims, wherein the second mating surface is fabricated from aluminium.

## Patentansprüche

1. Metall-Metall-Dichtung (10), bestehend aus einer ersten Passfläche (22) und einer zweiten Passfläche (32); wobei die erste Passfläche mit einem ringförmigen Vorsprung (24) versehen ist, der eine oder mehrere ringförmige Nuten (28) aufweist, und wobei der Vorsprung so konfiguriert ist, dass, wenn die erste und die zweite Oberfläche in Passkontakt gebracht werden, der ringförmige Vorsprung der ersten Passfläche die zweite Passfläche verformt, um eine Dichtung zu bilden, wobei der Vorsprung einen gleichschenkligen dreieckigen Querschnitt aufweist; **dadurch gekennzeichnet, dass** die Metall-Metall-Dichtung keine Flachdichtung oder Flüssigdichtung umfasst.

2. Dichtung nach Anspruch 1, wobei die erste Passfläche aus einem härteren Material als die zweite Passfläche hergestellt ist.

3. Dichtung nach Anspruch 1 oder Anspruch 2, wobei die erste Passfläche ein Sinterteil ist.

4. Dichtung nach Anspruch 1, wobei der dreieckige Querschnitt des Vorsprungs durch eine gekrümmte Spitze modifiziert ist.

5. Dichtung nach Anspruch 1, wobei die ringförmige Nut unterhalb des Niveaus der ersten Passfläche bereitgestellt ist.

6. Dichtung nach einem der vorhergehenden Ansprüche, wobei der Vorsprung eine Höhe von mehr als 1 mm aufweist.

7. Dichtung nach einem der vorhergehenden Ansprüche, wobei die erste Passfläche aus Stahl hergestellt ist.

8. Dichtung nach einem der vorhergehenden Ansprüche, wobei die zweite Passfläche aus Aluminium hergestellt ist.

## Revendications

1. Joint d'étanchéité métal à métal (10) constitué d'une première surface d'accouplement (22) et d'une seconde surface d'accouplement (32) ; ladite première surface d'accouplement étant dotée d'une saillie annulaire (24) possédant une ou plusieurs rainures annulaires (28) et ladite saillie étant conçue de sorte que lorsque les première et seconde surfaces sont mises en contact d'accouplement, la saillie annulaire de la première surface d'accouplement déforme la seconde surface d'accouplement pour former un joint d'étanchéité, ladite saillie possédant une section transversale triangulaire isocèle ; **caractérisé en ce que** le joint d'étanchéité métal à métal ne comprend pas de joint ni de produit d'étanchéité liquide.

2. Joint d'étanchéité selon la revendication 1, ladite première surface d'accouplement étant fabriquée à partir d'un matériau plus dur que la seconde surface d'accouplement.

3. Joint d'étanchéité selon la revendication 1 ou la revendication 2, ladite première surface d'accouplement étant une pièce frittée.

4. Joint d'étanchéité selon la revendication 1, ladite section transversale triangulaire de la saillie étant modifiée par une pointe incurvée.

5. Joint d'étanchéité selon la revendication 1, ladite rainure annulaire étant disposée en dessous du niveau de la première surface d'accouplement.

6. Joint d'étanchéité selon l'une quelconque des revendications précédentes, ladite saillie possédant une hauteur dépassant 1 mm.

7. Joint d'étanchéité selon l'une quelconque des revendications précédentes, ladite première surface d'accouplement étant fabriquée à partir de l'acier.

8. Joint d'étanchéité selon l'une quelconque des revendications précédentes, ladite seconde surface d'accouplement étant fabriquée à partir de l'aluminium.
